# EUROPÄISCHE PATENTANMELDUNG

(11) **EP 2 199 325 A1**
(43) Veröffentlichungstag der Anmeldung: **23.06.2010**
(21) Anmeldenummer: 09179810.8
(22) Anmeldetag: 18.12.2009
(51) Int. Cl.: C08J 9/00, C08J 9/16, C08K 3/00, C08K 3/22, C08J 9/224, B29C 44/34

(54) **Schaumstoffpartikel aus Styrolpolymeren**

(30) Priorität: 22.12.2008 EP 08172608
(71) Anmelder: BASF SE, 67056 Ludwigshafen (DE)
(72) Erfinder: Dahmen, Stefan, 67251, Freinsheim (DE); Altmann, Stephan, 67146, Deidesheim (DE); Rudolf, Peter, 68526, Ladenburg (DE); Flore, Karin, 67592, Floersheim-Dalsheim (DE); Burk, Yeni, 68159, Mannheim (DE); Riethues, Michael, 67071, Ludwigshafen (DE); Witt, Reiner, 68789, St. Leon-Rot (DE); Liedy, Reiner, 67459, Böhl-Iggelheim (DE); Auenmueller, Von, Jürgen, 68794, Oberhausen-Rheinhausen (DE); Henn, Rolf, 68723, Oftersheim (DE)
(74) Vertreter: Isenbruck, Günter

(57) **Zusammenfassung**

Verbesserte, expandierbare Partikel aus Styrolpolymeren weisen eine Beschichtung mit einem wasserabsorbierenden Polymeren und einem Polyamin auf.

## Beschreibung

Die Erfindung betrifft vorgeschäumte Styrolpolymere mit reversibler Wasseraufnahme, ein Verfahren zur ihrer Herstellung sowie daraus hergestellte Schaumstoffformkörper und deren Verwendung.

Schaumstoffformkörper aus expandiertem Polystyrol sind so genannte Partikelschäume und werden in der Regel in einem mehrstufigen Verfahren hergestellt. Zunächst stellt man expandierbares Polystyrol (im folgenden EPS) her, was nach verschiedenen Verfahren geschehen kann:
A) durch Suspensionspolymerisation von Styrol oder anderer vinylaromatischer Monomere bzw. Comonomere in Gegenwart von Treibmitteln, wodurch unmittelbar treibmittelhaltige EPS-Partikel entstehen
B) durch Imprägnieren von treibmittelfreien Polystyrolpartikeln mit dem Treibmittel unter Druck in einer erhitzten Suspension, wobei das Treibmittel in die erweichten Partikel diffundiert; bei Abkühlen der Suspension unter Druck erhält man treibmittelhaltige EPS-Partikel
C) im sog. Extrusionsverfahren durch Einmischen des Treibmittels in eine Polystyrolschmelze mittels eines Extruders oder einer anderen Mischvorrichtung; die treibmittelhaltige Schmelze wird unter Druck ausgetragen und z.B. mittels Unterwassergranulierung zu EPS-Partikeln granuliert.

Die erhaltenen Partikel können vorzugsweise kompakt aber auch bereits in geringem Ausmaß angeschäumt sein.

Bei dem anschließenden Vorschäumen werden die treibmittelhaltigen EPS-Partikel durch Erwärmen, üblicherweise mit Wasserdampf, expandiert und man erhält treibmittelhaltige, partiell expandierte Partikel. Diese vorgeschäumten Partikel werden üblicherweise zwecks teilweisen Austauschs des Treibmittels gegen Luft zwischengelagert. Schließlich wird beim sog. Ausschäumen eine dem gewünschten Schaumstoffkörper entsprechende Form vollständig mit den zwischengelagerten Partikeln gefüllt, verschlossen und (in der Regel ebenfalls mit Wasserdampf) erhitzt. Dabei expandieren die Partikel nochmals und verschweißen miteinander zu dem fertigen Formkörper aus EPS-Schaumstoff, der auch als Partikelschaum bezeichnet wird.

Aus vorgeschäumten EPS-Partikeln hergestellte Formkörper, insbesondere Schaumstoffplatten werden u.a. im Bauwesen verwendet, beispielsweise zur Wärmedämmung von Gebäudekellern, -wänden und -dächern. Die Dämmung kann an der an der Außenseite des Kellers, der Wand bzw. des Daches angebracht sein (Außendämmung), oder an der Innenseite (Innendämmung). Eine Innendämmung ist besonders für Gebäude geeignet, deren Außenansicht nicht verändert werden soll, beispielsweise Altbauten oder denkmalgeschützte Gebäude. Baustoffe sind nach ihrem Brandverhalten in verschiedene Klassifizierungen eingeteilt. Für die Festlegung der jeweiligen Brandschutzklasse (Brandklasse/Baustoffklasse) ist ein Nachweis durch Prüfzeugnis und Zulassung notwendig, bei DIN-Baustoffen sind diese in der DIN 4102 festgelegt. Die Mindestanforderung nach DIN 4102 für alle Baustoffe in eingebautem Zustand ist die Baustoffklasse B 2 (schwer entflammbar).

Polystyrolschäume sind hydrophob, nehmen keine Feuchtigkeit auf und sind daher beständig gegen Verrottung. Allerdings können bei der Innendämmung durch hinter der Dämmschicht kondensierende Raumluftfeuchtigkeit unerwünschte Feuchtigkeitsschäden am Bauwerk auftreten, beispielsweise Schimmelbildung. Außerdem kann die Dämmschicht die feuchtigkeitsregulierende Wirkung bestimmter Baustoffe (u. a. Ton, Sandstein) vermindern, was zu stärkeren Schwankungen der Luftfeuchtigkeit führt und so das Raumklima verschlechtert. Daher wäre eine Dämmung mit Polystyrolschäumen wünschenswert, welche diese Nachteile nicht aufweist.

Die EP 459 147 A2 beschreibt expandierbare Styrolpolymerisate, enthaltend a) ein Styrolpolymerisat, b) Wasser, c) ein feinteiliges organisches Polymer mit hohem Wasseraufnahmevermögen, beispielsweise ein vernetztes, teilweise neutralisiertes Acrylsäurepolymer (Superabsorber), und d) Kohlenwasserstoffe als Treibmittel. Das wasseraufnehmende Polymer c) kann im partikelförmigen Styrolpolymerisat a) gleichmäßig verteilt, oder/und als Oberflächenbeschichtung vorliegen. Zur Herstellung beschichteter vorgeschäumter Partikel werden gemäß Spalte 4 Zeilen 2-16 die Partikel zunächst mit Komponente c) beschichtet und danach vorgeschäumt.

Dieses Verfahren hat den Nachteil, dass die wasseraufnehmende Beschichtung c) beim anschließenden Vorschäumen durch den Kontakt mit dem dazu verwendeten Wasserdampf mit Feuchtigkeit gesättigt wird. Außerdem kann die Beschichtung beim Vorschäumen durch Reibung der Partikel aneinander oder an der Vorschäumapparatur abgerieben werden.

Die DE 102007012626 A1 beschreibt Verfahren zur Herstellung wasserabsorbierender beschichteter Partikel aus vorgeschäumten Polystyrol und deren Verwendung zur Herstellung von wasserabsorbierenden Polystyrolformkörpern. Dabei werden vorgeschäumte Polystrolpartikel erst mit einer Polymerdispersion beschichtet und anschließend mit einem wasserabsorbierenden Polymer W auf Basis einer vernetzten, teilweise neutralisierten Acrylsäure (Superabsorber). Diese beschichteten vorgeschäumten Polystyrolpartikel werden anschließend nach bekannten Methoden zu Formkörpern weiterverarbeitet. Dieses Verfahren und die durch dieses Verfahren hergestellten Polystyrolformkörper haben den Nachteil, dass unter Umständen durch die Beschichtung mit der Dispersion und dem Superabsorber eine erhöhte Brandlast in den Formkörper eingebracht werden kann.

Die EP 1837172 A1 beschreibt Dämmstoffsysteme, die mit einer reversibel wasserspeichernden Schicht versehen ist, sowie deren Herstellung und Verwendung. Dabei wird ein wasserabsorbierendes Polymer (Superabsorber) als Schicht auf die Oberfläche eines Formkörpers aufgebracht, ggf. unter Mitverwendung einer Polymerdispersion PD als Haftvermittler. In einer Ausführungsform wird der Superabsorber in einem Verbundstoff als Vlies auf die Oberfläche des Formkörpers aufgebracht. Weiterhin beschreibt die EP 1837172 A1 eine bevorzugte Ausführungsform, in der die Formkörperfläche mit einer Flammschutzbeschichtung versehen wird, besonders bevorzugt vor der Beschichtung mit dem Superabsorber. Das Verfahren und die beschriebenen Dämmstoffe haben für die Innendämmung den Nachteil, dass nur die Oberfläche der Dämmstoffplatte mit dem reversibel wasseraufnehmenden Polymer beschichtet ist. Bevorzugt wird auch nur die Oberfläche beschichtet, die zur Gebäudewand weist. Durch die wenig diffusionsoffene Styrol-Dämmstoffplatte ist damit eine reversible Abgabe des aufgenommenen Wassers an den beheizten Innenraum nicht mehr oder nur schlecht möglich, was vor allem im Winter die Reversibilität der Wasseraufnahme stark beeinträchtigt. Außerdem kann es so zu einer zu starken Befeuchtung des Absorbers an der Außenwand und folglich starkes Quellen einhergehend mit Schimmelwachstum und sogar Ablösungsvorgängen kommen. Der Absorber ist dort also ungünstig positioniert.

Die WO 2007/023091 A1 beschreibt Methoden zur Ausrüstung von Partikelschaumstoffen mit Flammschutzmitteln, durch die ein verbessertes Brandverhalten / Brandschutz erreicht wird. Die auf diese Weise hergestellten Polymere und Polymerformkörper weisen allerdings keine (reversible) Wasseraufnahmefähigkeit auf. In der Tat sind diese Systeme vor der Verarbeitung so empfindlich gegenüber Wasser, dass sie nicht auf die übliche Art und Weise durch Wasserdampf zu Formkörpern fertig geschäumt werden können. Stattdessen erfolgt das Abbinden durch Heißluft, damit keine wasserlöslichen Bestandteile der Polymerbeschichtung der Schaumstoffpartikel ausgewaschen werden.

Es bestand die Aufgabe, verbesserte brandgeschützte Schaumstoffformkörper mit reversibler Wasseraufnahme aus vorgeschäumten Schaumstoffpartikeln und ein Verfahren zu ihrer Herstellung zu finden.

Die vorliegende Erfindung betrifft Schaumstoffpartikel aus Styrolpolymeren, **dadurch gekennzeichnet, dass** die Schaumstoffpartikel mit einer Kombination aus einem wasserabsorbierenden Polymer W und mit einem Flammschutzmittel F ausgerüstet sind.

Es wurde gefunden, dass durch die kombinierte Verwendung des wasserabsorbierenden Polymers W und des Flammschutzmittels F sowohl eine hinreichende FeuchteAufnahme, als auch eine deutliche Senkung der Brandlast erreicht werden kann.

Die Schaumstoffpartikel enthalten im Wesentlichen treibmittelhaltige Styrolpolymere wie Polystyrol (PS), Styrolcopolymere wie Styrol-Acrylnitril (SAN), Styrolbutadien-Blockcopolymere oder Mischungen davon.

Die vorliegende Erfindung betrifft weiterhin ein Verfahren zur Herstellung von Schaumstoffpartikeln aus Styrolpolymeren, **dadurch gekennzeichnet, dass** man
a) zunächst Partikel aus expandierbarem Polystyrol vorschäumt und diese dann
b) mit einem Flammschutzmittel F und
c) mit einem wasserabsorbierenden Polymer W beschichtet, wobei die Beschichtung mit dem Polymer W und dem Flammschutzmittel F in beliebiger Reihenfolge oder gleichzeitig erfolgen kann.

In einer besonders bevorzugten Ausführungsform sind die Schaumstoffpartikel aus Styrolpolymeren zusätzlich mit einem Polyamin A beschichtet.

### Wasserabsorbierendes Polymer W

Die vorgeschäumten Partikel werden erfindungsgemäß mit einem wasserabsorbierenden Polymer W beschichtet, welches ein hohes Wasseraufnahmevermögen, vorzugsweise von wenigstens 10 g Wasser/ g Polymer, insbesondere von 20 g Wasser/ g Polymer aufweist. Die Bestimmung der Wasseraufnahme erfolgt wie in den Beispielen beschrieben.

Bevorzugt ist das wasserabsorbierende Polymer W ein Säuregruppen tragendes Polymer, dessen Säure-Gruppen zu 10 bis 90 mol-% neutralisiert sind. Besonders bevorzugt sind 35 bis 80, insbesondere 40 bis 75 mol-% der Säuregruppen neutralisiert.

Die wasserabsorbierenden Polymere W werden beispielsweise erhalten durch Polymerisation einer Monomermischung enthaltend
- Wa): mindestens ein ethylenisch ungesättigtes, säuregruppentragendes Monomer Wa),
- Wb): mindestens einen Vernetzer Wb),
- Wc): gegebenenfalls ein oder mehrere mit dem Monomeren Wa) copolymerisierbare ethylenisch und/oder allylisch ungesättigte Comonomere Wc) und
- Wd): gegebenenfalls ein oder mehrere wasserlösliche Polymere Wd), auf welche die Monomere Wa), Wb) und ggf. Wc) zumindest teilweise aufgepfropft werden können.

Geeignete Monomere Wa) sind beispielsweise ethylenisch ungesättigte Carbonsäuren, wie Acrylsäure, Methacrylsäure, Maleinsäure, Fumarsäure und Itaconsäure, oder deren Derivate, insbesondere deren Salze, z.B Alkalimetallsalze wie Natriumacrylat bzw. -methacrylat. Besonders bevorzugte Monomere sind Acrylsäure und Methacrylsäure. Ganz besonders bevorzugt ist Acrylsäure.

Die Monomere Wa), insbesondere Acrylsäure, enthalten vorzugsweise bis zu 0,025 Gew.-% eines Hydrochinonhalbethers. Bevorzugte Hydrochinonhalbether sind Hydrochinonmonomethylether (MEHQ) und/oder Tocopherole.

Unter Tocopherol werden Verbindungen der folgenden Formel verstanden 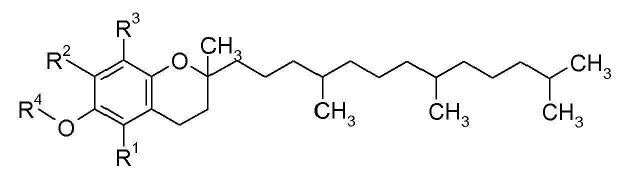 wobei R¹ Wasserstoff oder Methyl, R² Wasserstoff oder Methyl, R³ Wasserstoff oder Methyl und R⁴ Wasserstoff oder einen Säurerest mit 1 bis 20 Kohlenstoffatomen bedeutet. Bevorzugte Reste für R⁴ sind Acetyl, Ascorbyl, Succinyl, Nicotinyl und andere physiologisch verträgliche Carbonsäuren. Die Carbonsäuren können Mono-, Di- oder Tricarbonsäuren sein.

Bevorzugt ist alpha-Tocopherol mit R¹ = R² = R³ = Methyl, insbesondere racemisches alpha-Tocopherol. R¹ ist besonders bevorzugt Wasserstoff oder Acetyl. Insbesondere bevorzugt ist RRR-alpha-Tocopherol.

Die Monomerlösung enthält bevorzugt höchstens 130 Gew.-ppm, besonders bevorzugt höchstens 70 Gew.-ppm, bevorzugt mindesten 10 Gew.-ppm, besonders bevorzugt mindesten 30 Gew.-ppm, insbesondere um 50 Gew.-ppm, Hydrochinonhalbether, jeweils bezogen auf Acrylsäure, wobei Acrylsäuresalze als Acrylsäure gerechnet und mit berücksichtigt werden. Beispielsweise kann zur Herstellung der Monomerlösung eine Acrylsäure mit einem entsprechenden Gehalt an Hydrochinonhalbether verwendet werden.

Die Vernetzer Wb) sind Verbindungen mit mindestens zwei polymerisierbaren Gruppen, die in das Polymernetzwerk radikalisch einpolymerisiert werden können. Geeignete Vernetzer Wb) sind beispielsweise Ethylenglykoldimethacrylat, Diethylenglykoldiacrylat, Allylmethacrylat, 1,1,1-Trimethylolpropantriacrylat, Triallylamin, Tetraallylethoxyethan, wie in EP-A-0 530 438 beschrieben, Di- und Triacrylate, wie in EP-A-0 547 847, EP-A-0 559 476, EP-A-0 632 068, WO-A-93/21237, WO-A-03/104299, WO-A-03/104300, WO-A-03/104301 und DE-A-103 31 450 beschrieben, gemischte Acrylate, die neben Acrylatgruppen weitere ethylenisch ungesättigte Gruppen enthalten, wie in DE-A-103 31 456 und WO-A-04/013064 beschrieben, oder Vernetzermischungen, wie beispielsweise in DE-A-195 43 368, DE-A-196 46 484, WO-A-90/15830 und WO-A-02/32962 beschrieben.

Geeignete Vernetzer Wb) sind insbesondere N,N'-Methylenbisacrylamid und N,N'-Methylenbismethacrylamid, Ester ungesättigter Mono- oder Polycarbonsäuren von Polyolen, wie Diacrylat oder Triacrylat, beispielsweise Butandiol- oder Ethylenglykoldiacrylat bzw. -methacrylat sowie 1,1,1-Trimethylolpropantriacrylat und Allylverbindungen, wie Allyl(meth)acrylat, Triallylcyanurat, Maleinsäurediallylester, Polyallylester, Tetraallylethoxyethan, Triallylamin, Tetraallylethylendiamin, Allylester der Phosphorsäure sowie Vinylphosphonsäurederivate, wie sie beispielsweise in EP-A-0 343 427 beschrieben sind. Weiterhin geeignete Vernetzer Wb) sind Pentaerythritoldi-, Pentaerythritoltri- und Pentaerythritoltetraallylether, Polyethylenglykoldiallylether, Ethylenglykoldiallylether, Glyzerindi- und Glyzerintriallylether, Polyallylether auf Basis Sorbitol, sowie ethoxylierte Varianten davon. Ebenfalls einsetzbar sind Di(meth)acrylate von Polyethylenglykolen, wobei das eingesetzte Polyethylenglykol ein Molekulargewicht zwischen 300 und 1000 aufweist.

Besonders vorteilhafte Vernetzer Wb) sind Di- und Triacrylate des 3- bis 15-fach ethoxylierten Glyzerins, des 3- bis 15-fach ethoxylierten Trimethylolpropans, des 3- bis 15-fach ethoxylierten Trimethylolethans, insbesondere Di- und Triacrylate des 2- bis 6-fach ethoxylierten Glyzerins oder Trimethylolpropans, des 3-fach propoxylierten Glyzerins oder Trimethylolpropans, sowie des 3-fach gemischt ethoxylierten oder propoxylierten Glyzerins oder Trimethylolpropans, des 15-fach ethoxylierten Glyzerins oder Trimethylolpropans, sowie des 40-fach ethoxylierten Glyzerins, Trimethylolethans oder Trimethylolpropans.

Die Menge an Vernetzer Wb) beträgt vorzugsweise mindestens 0,001 mol-%, besonders bevorzugt mindestens 0,005 mol-%, ganz besonders bevorzugt mindestens 0,01 mol-%, und vorzugsweise bis zu 10 mol-%, besonders bevorzugt bis zu 5 mol-%, ganz besonders bevorzugt bis zu 2 mol-%, jeweils bezogen auf das Monomer Wa).

Mit den Monomeren Wa) copolymerisierbare ethylenisch ungesättigte Comonomere Wc) sind beispielsweise Säureamide wie Acrylamid, Methacrylamid oder Crotonsäureamid. Weiterhin als Comonomere Wc) geeignet sind Säureester, insbesondere Ester der Acrylsäure bzw. Methacrylsäure wie Dimethylaminoethylmethacrylat, Dimethylaminoethylacrylat, Dimethylaminopropylacrylat, Diethylaminopropylacrylat, Dimethylaminobutylacrylat, Dimethylaminoethylmethacrylat, Diethylaminoethylmethacrylat, Dimethylaminoneopentylacrylat und Dimethylaminoneopentylmethacrylat.

Falls man Comonomere Wc) mitverwendet, beträgt ihre Menge üblicherweise 0,01 bis 50, bevorzugt 0,1 bis 20 und besonders bevorzugt 1 bis 10 mol-%, bezogen auf das Monomer Wa).

Als wasserlösliche Polymere Wd) können Polyvinylalkohol, Polyvinylpyrrolidon, Stärke, Stärkederivate, Polyglykole oder Polyacrylsäuren, vorzugsweise Polyvinylalkohol und Stärke, eingesetzt werden.

Falls wasserlösliche Polymere Wd) mitverwendet werden, beträgt deren Menge in der Regel 0,01 bis 50, bevorzugt 0,1 bis 20 und besonders bevorzugt 1 bis 10 mol-%, bezogen auf das Monomer Wa).

In einer bevorzugten Ausführungsform ist das wasserabsorbierende Polymer W ein Polymer auf Basis einer vernetzten Acrylsäure (Polyacrylsäure). Solche Polymere werden auch als Superabsorber bezeichnet. Ebenfalls bevorzugt liegt das wasserabsorbierende Polymer in Form oberflächennachvernetzter Partikel vor. Besonders bevorzugte Polymere W basieren auf vernetzter Acrylsäure mit Polyethylenglykoldiacrylat als Vernetzer, insbesondere mit einer zusätzlichen Oberflächenvernetzung mit beispielsweise Oxazodilinon und Aluminiumsulfat.

Es versteht sich, dass auch Mischungen verschiedener wasserabsorbierender Polymere W verwendet werden können.

Die Herstellung eines geeigneten wasserabsorbierenden Polymers W sowie weitere geeignete hydrophile ethylenisch ungesättigte Monomere werden in DE-A-199 41 423, EP-A-0 686 650, WO-A-01/45758 und WO-A-03/104300 beschrieben. Geeignete wasserabsorbierende Polymere werden üblicherweise durch Polymerisation einer wässrigen Monomerlösung und gegebenenfalls einer anschließenden Zerkleinerung des Hydrogels erhalten. Geeignete Herstellverfahren sind in der Literatur beschrieben. Wasserabsorbierende Polymere können beispielsweise erhalten werden durch
- Gelpolymerisation im Batchverfahren bzw. Rohrreaktor und anschließender Zerkleinerung im Fleischwolf, Extruder oder Kneter (EP-A-0 445 619, DE-A-19 846 413)
- Polymerisation im Kneter, wobei durch beispielsweise gegenläufige Rührwellen kontinuierlich zerkleinert wird (WO-A-01/38402)
- Polymerisation auf dem Band und anschließende Zerkleinerung im Fleischwolf, Extruder oder Kneter (DE-A-38 25 366, US-6,241,928)
- Emulsionspolymerisation, wobei bereits Perlpolymerisate relativ enger Gelgrößenverteilung anfallen (EP-A-0 457 660)
- In-situ Polymerisation einer Gewebeschicht, die zumeist im kontinuierlichen Betrieb zuvor mit wässriger Monomerlösung besprüht und anschließend einer Photopolymerisation unterworfen wurde (WO-A-02/94328, WO-A-02/94329)
- Sprühpolymerisation (WO-A-96/40427, DE-A-103 40 253)

Die Umsetzung wird vorzugsweise in einem Kneter, wie beispielsweise in WO-A-01/38402 beschrieben, oder auf einem Bandreaktor, wie beispielsweise in EP-A-0 955 086 beschrieben, durchgeführt.

Die Säuregruppen der erhaltenen Hydrogele sind zu 10 bis 90, bevorzugt 35 bis 80 und insbesondere 40 bis 75mol-% neutralisiert, wobei die üblichen Neutralisationsmittel verwendet werden können, vorzugsweise Alkalimetallhydroxide, Alkalimetalloxide, Alkalimetallcarbonate oder Alkalimetallhydrogencarbonate sowie deren Mischungen. Statt Alkalimetallsalzen können auch Ammoniumsalze verwendet werden. Natrium und Kalium als Alkalimetalle sind besonders bevorzugt, ganz besonders bevorzugt sind Natriumhydroxid, Natriumcarbonat oder Natriumhydrogencarbonat sowie deren Mischungen.

Üblicherweise wird die Neutralisation durch Einmischung des Neutralisationsmittels als wässrige Lösung oder bevorzugt auch als Feststoff erreicht. Beispielsweise kann Natriumhydroxid mit einem Wasseranteil deutlich unter 50 Gew.-% als wachsartige Masse mit einem Schmelzpunkt oberhalb 23°C vorliegen. In diesem Fall ist eine Dosierung als Stückgut oder Schmelze bei erhöhter Temperatur möglich.

Die Neutralisation kann nach der Polymerisation auf der Stufe des Hydrogels durchgeführt werden; diese Neutralisation der Monomerlösung auf den Endneutralisationsgrad ist bevorzugt. Es ist aber auch möglich, beispielsweise bis zu 40 mol-%, vorzugsweise 10 bis 30 mol-%, besonders bevorzugt 15 bis 25 mol-%, der Säuregruppen bereits vor der Polymerisation zu neutralisieren (Vorneutralisation), indem man einen Teil des Neutralisationsmittels bereits der Monomerlösung zusetzt, und anschließend den gewünschten Endneutralisationsgrad nach der Polymerisation auf der Stufe des Hydrogels einzustellen (Nachneutralisation).

Die Monomerlösung kann durch Einmischen des Neutralisationsmittels neutralisiert werden. Das Hydrogel kann mechanisch zerkleinert werden, beispielsweise mittels eines Fleischwolfes, wobei das Neutralisationsmittel aufgesprüht, übergestreut oder aufgegossen und dann sorgfältig untergemischt werden kann. Dazu kann die erhaltene Gelmasse noch mehrmals zur Homogenisierung gewolft werden.

Das neutralisierte Hydrogel wird dann beispielsweise mit einem Band- oder Walzentrockner getrocknet bis der Restfeuchtegehalt vorzugsweise unter 15 Gew.-%, insbesondere unter 10 Gew.-% liegt, wobei der Wassergehalt gemäß der von der EDANA (European Disposables and Nonwovens Association) empfohlenen Testmethode Nr. 430.2-02 "Moisture content" bestimmt wird. Wahlweise kann zur Trocknung auch ein Wirbelbetttrockner oder ein beheizter Pflugscharmischer verwendet werden.

Falls besonders weiße Produkte erhalten werden sollen, ist es vorteilhaft bei der Trocknung dieses Gels einen schnellen Abtransport des verdampfenden Wassers sicherzustellen. Dazu ist die Trocknertemperatur zu optimieren, die Luftzu- und -abführung muss kontrolliert erfolgen, und es ist in jedem Fall auf ausreichende Belüftung zu achten. Die Trocknung ist naturgemäß umso einfacher und das Produkt umso weißer, wenn der Feststoffgehalt des Gels möglichst hoch ist. Bevorzugt liegt der Feststoffgehalt des Gels vor der Trocknung zwischen 30 und 80 Gew.-%. Besonders vorteilhaft ist die Belüftung des Trockners mit Stickstoff oder einem anderen nicht-oxidierenden Inertgas. Wahlweise kann aber auch einfach nur der Partialdruck des Sauerstoffs während der Trocknung abgesenkt werden, um oxidative Vergilbungsvorgänge zu verhindern. Im Regelfall führt aber auch eine ausreichende Belüftung und Abführung des Wasserdampfes zu einem weißen Produkt. Vorteilhaft hinsichtlich Farbe und Produktqualität ist in der Regel eine möglichst kurze Trocknungszeit.

Das getrocknete Hydrogel wird vorzugsweise gemahlen und gesiebt, wobei zur Mahlung üblicherweise Walzenstühle, Stiftmühlen oder Schwingmühlen eingesetzt werden können. Die Partikelgröße des gesiebten, trockenen Hydrogels beträgt vorzugsweise unter 1000 µm, besonders bevorzugt unter 900 µm, ganz besonders bevorzugt unter 850 µm, und vorzugsweise über 10 µm.

Ganz besonders bevorzugt ist eine Partikelgröße (Siebschnitt) von 45 bis 500 µm. Die Partikelgröße wird gemäß der von der EDANA empfohlenen Testmethode Nr. 420.2-02 "Particle size distribution" bestimmt.

Die wasserabsorbierenden Polymere werden vorzugsweise anschließend oberflächennachvernetzt. Hierzu geeignete Nachvernetzer sind Verbindungen, die mindestens zwei Gruppen enthalten, die mit den Carboxylatgruppen des Hydrogels kovalente Bindungen bilden können. Geeignete Verbindungen sind beispielsweise Alkoxysiliylverbindungen, Polyaziridine, Polyamine, Polyamidoamine, Di- oder Polyepoxide, wie in EP-A-0 083 022, EP-A-543 303 und EP-A-937 736 beschrieben, di- oder polyfunktionelle Alkohole, wie in DE-C-33 14 019, DE-C-35 23 617 und EP-A-450 922 beschrieben, oder β-Hydroxyalkylamide, wie in DE-A-102 04 938 und US-6,239,230 beschrieben.

Des weiteren sind in DE-A-40 20 780 zyklische Karbonate, in DE-A-198 07 502 2-Oxazolidon und dessen Derivate, wie 2-Hydroxyethyl-2-oxazolidon, in DE-A-198 07 992 Bis- und Poly-2-oxazolidinone, in DE-A-198 54 573 2-Oxotetrahydro-1,3-oxazin und dessen Derivate, in DE-A-198 54 574 N-Acyl-2-Oxazolidone, in DE-A-102 04 937 zyklische Harnstoffe, in DE-A-103 34 584 bizyklische Amidacetale, in EP-A-1 199 327 Oxetane und zyklische Harnstoffe und in WO-A-03/031482 Morpholin-2,3-dion und dessen Derivate als geeignete Oberflächennachvernetzer beschrieben.

Die Menge der genannte Oberflächennachvernetzer, falls mitverwendet, beträgt üblicherweise 0,001 bis 5, bevorzugt 0,01 bis 3 Gew.-%, bezogen auf das Hydrogel.

Vorteilhaft werden polyvalente Kationen neben den Oberflächennachvernetzern zur Oberflächennachvernetzung verwendet. Die einsetzbaren polyvalenten Kationen sind beispielsweise zweiwertige Kationen, wie die Kationen von Zink, Magnesium, Kalzium und Strontium, dreiwertige Kationen, wie die Kationen von Aluminium, Eisen, Chrom, Seltenerden und Mangan, vierwertige Kationen, wie die Kationen von Titan und Zirkonium. Als Gegenion sind Chlorid, Bromid, Sulfat, Hydrogensulfat, Carbonat, Hydrogencarbonat, Nitrat, Phosphat, Hydrogenphosphat, Dihydrogenphosphat und Carboxylat, wie Acetat und Lactat, möglich. Aluminiumsulfat ist bevorzugt.

Die Menge der polyvalenten Kationen, falls mitverwendet, beträgt üblicherweise 0,001 bis 10, bevorzugt 0,1 bis 5 Gew.-%, bezogen auf das Hydrogel.

Die Nachvernetzung wird üblicherweise so durchgeführt, dass eine Lösung des Oberflächennachvernetzers auf das Hydrogel oder das trockene Polymerpulver aufgesprüht wird. Dabei können Oberflächennachvernetzer und polyvalentes Kation in einer gemeinsamen Lösung oder als getrennte Lösungen aufgesprüht werden. Im Anschluss an das Aufsprühen wird das Polymerpulver thermisch getrocknet, wobei die Vernetzungsreaktion sowohl vor als auch während der Trocknung stattfinden kann.

Das Aufsprühen einer Lösung des Vernetzers wird vorzugsweise in Mischern mit bewegten Mischwerkzeugen, wie Schneckenmischer, Paddelmischer, Scheibenmischer, Pflugscharmischer und Schaufelmischer, durchgeführt werden. Besonders bevorzugt sind Vertikalmischer, ganz besonders bevorzugt sind Pflugscharmischer und Schaufelmischer. Geeignete Mischer sind beispielsweise Lödige®-Mischer, Bepex®-Mischer, Nauta®-Mischer, Processall®-Mischer und Schugi®-Mischer. Ganz besonders bevorzugt werden Hochgeschwindigkeitsmischer, beispielsweise vom Typ Schuggi-Flexomix® oder Turbolizer® eingesetzt.

Die thermische Trocknung wird vorzugsweise in Kontakttrocknern, besonders bevorzugt Schaufeltrocknern, ganz besonders bevorzugt Scheibentrocknern, durchgeführt. Geeignete Trockner sind beispielsweise Bepex®-Trockner und Nara®-Trockner. Überdies können auch Wirbelschichttrockner eingesetzt werden. Die Trocknung kann im Mischer selbst erfolgen, durch Beheizung des Mantels oder Einblasen von Warmluft. Ebenso geeignet ist ein nachgeschalteter Trockner, wie beispielsweise ein Hordentrockner, ein Drehrohrofen oder eine beheizbare Schnecke. Es kann aber auch beispielsweise eine azeotrope Destillation als Trocknungsverfahren benutzt werden.

Bevorzugte Trocknungstemperaturen liegen im Bereich 50 bis 250°C, bevorzugt bei 50 bis 200°C, und besonders bevorzugt bei 50 bis 150°C. Die bevorzugte Verweilzeit bei dieser Temperatur im Reaktionsmischer oder Trockner beträgt unter 30 Minuten, besonders bevorzugt unter 10 Minuten.

### Flammschutzmittel F

Die Flammschutzmittel F sind vorzugsweise anorganische Verbindungen wie Blähgraphit, Borate, insbesondere Zinkborate, insbesondere aber Aluminiumoxide und Ammoniumphosphate, z. B. Ammoniumpolyphosphate, z. B. die unter der Marke Exolit^{®} vertriebenen Typen.

Weitere geeignete Flammschutzmittel sind Melaminverbindungen oder Phosphorverbindungen oder intumeszierende Massen, welche sich bei Einwirkung höherer Temperaturen, in der Regel über 80 bis 100°C, aufblähen, quellen oder aufschäumen und dabei einen isolierenden und hitzebeständigen Schaum bilden, der die darunter liegenden wärmedämmende Schaumstoffpartikel vor der Feuer- und Hitzewirkung schützt. Bevorzugte Flammschutzmittel sind Triethylphosphat, Diphenylkresylphosphat, Tris-(Chlorpropyl)-phosphat und Dietylethanphosphonat. Die Menge der Flammschutzmittel oder intumeszierenden Massen beträgt in der Regel, 10 bis 70 Gew.-%, bevorzugt 20 bis 40 Gew.-% bezogen auf die Schaumstoffpartikel.

Erfindungsgemäß ist es möglich, einen ausreichenden Brandschutz bei Verwendung von Schaumstoffpartikeln, die keine, insbesondere keine halogenierten Flammschutzmittel enthalten, zu erreichen, bzw. mit geringeren Mengen an Flammschutzmittel auszukommen.

### Polyamin A

In einer besonders bevorzugten Ausführungsform sind die Schaumstoffpartikel aus Styrolpolymeren zusätzlich mit einem Polyamin A beschichtet.

In einer bevorzugten Ausführungsform ist das Polyamin A ein Polyethylenimin, vorzugsweise mit einem Molekulargewicht von 250 000 bis 120 000 000, insbesondere 500 000 bis 1 000 000, bevorzugt der folgenden Formel:

H₂N (C₂H₄-NH)ₙ C₂H₄NH₂

worin
n eine ganze Zahl bedeutet und
wobei die an die C- und N-Atome gebundenen Wasserstoffatome ersetzt sein können durch Alkylreste, die mit Amino- oder Iminogruppen substituiert sein können und wobei die N-Atome zusätzlich quaterniert sein können unter Bildung kationischer Polyethylenimine.

In einer weiteren bevorzugten Ausführungsform sind die Polyamine A Copolymere aus Polyaminen mit anderen, vorzugsweise Stickstoff enthaltenden Monomeren, vorzugsweise mit Polyvinylaminen, insbesondere hydrophob modifizierte Vinylamin- oder Ethylenimin-Einheiten enthaltende Polymere, die erhältlich sind durch Umsetzung von
(a) Vinylamin- oder Ethylenimin-Einheiten enthaltenden Polymeren mit
(b) Ethylenoxid-Einheiten enthaltenden Formeln, welche eine funktionelle Gruppe X enthalten, die mit einer OH-Gruppe kovalent verknüpfbar ist, beispielsweise die aus WO 03/099880 A1 bekannten hydrophob modifizierten Vinylamin- oder Ethylenimin-Einheiten enthaltenden Polymere, die erhältlich sind durch Umsetzung von

(a) Vinylamin- oder Ethylenimin-Einheiten enthaltenden Polymeren mit
(b) Verbindungen der Formel

   R-Y-(EO,PO,BuO)ₙ-X

   in der bedeuten
   R C₄-C₂₆-Alkyl oder C₄-C₂₆-Alkenyl
   Y -O-, -NH-, -COO-,
   EO Ethylenoxid-Einheit
   PO Propylenoxid-Einheit
   BuO Butylenoxid-Einheit
   n 1 bis 250
   X eine funktionelle Gruppe, die mit einer OH-Gruppe kovalent anknüpfbar ist.

In einer weiteren bevorzugten Ausführungsform sind die Polymere A Kondensationsprodukte, die erhältlich sind durch Umsetzung von Polyamino-Verbindungen mit Polyalkylenoxid-Derivaten, die an den endständigen Hydroxylgruppen mit Epichlorhydrin umgesetzt sind. Besonders bevorzugt sind derartige, aus der DE-A-24 34 816 bekannte Verbindungen, die dadurch erhältlich sind, dass man
a) ein Gewichtsteil eines Polyamido-Amins, das aus 1 Molteil einer Dicarbonsäure mit 4 bis 10 Kohlenstoffatomen und 0,8 bis 1,4 Molteilen eines Polyalkylenpolyamins mit 3 bis 10 Alkylenimin-Einheiten, das gegebenenfalls bis zu 10 Gew.-% eines Diamins enthält, erhalten worden ist und das gegebenenfalls bis zu 8 Äthylenimin-Einheiten pro basischer Stickstoffgruppierung aufgepfropft enthält, mit
b) 0,3 bis 2 Gewichtsteilen eines Polyalkylenoxid-Derivates, das an den endständigen OH-Gruppen mit mindestens äquivalenten Mengen Epichlorhydrin umgesetzt ist, bei 20 bis 100°C reagieren lässt, und die Reaktion bis zur Bildung hochmolekularer, gerade noch wasserlöslicher, Harze führt, die gemessen bei 20°C in 20 %-iger wässriger Lösung - eine Viskosität von > 300 mPa x sec aufweisen.

In einer weiteren bevorzugten Ausführungsform sind die Polyamine A Triazin-Derivate mit wenigstens einer gegebenenfalls substituierten Aminogruppe, wobei entweder der Triazinring direkt oder die Aminogruppe substituiert ist mit einem Alkylen- oder Alkylenoxid-Rest mit wenigstens 8 Kohlenstoffatomen, wobei der Alkylenrest endständig substituiert sein kann, insbesondere mit einer OH-Gruppe.

Bevorzugte derartige Verbindungen sind beispielsweise 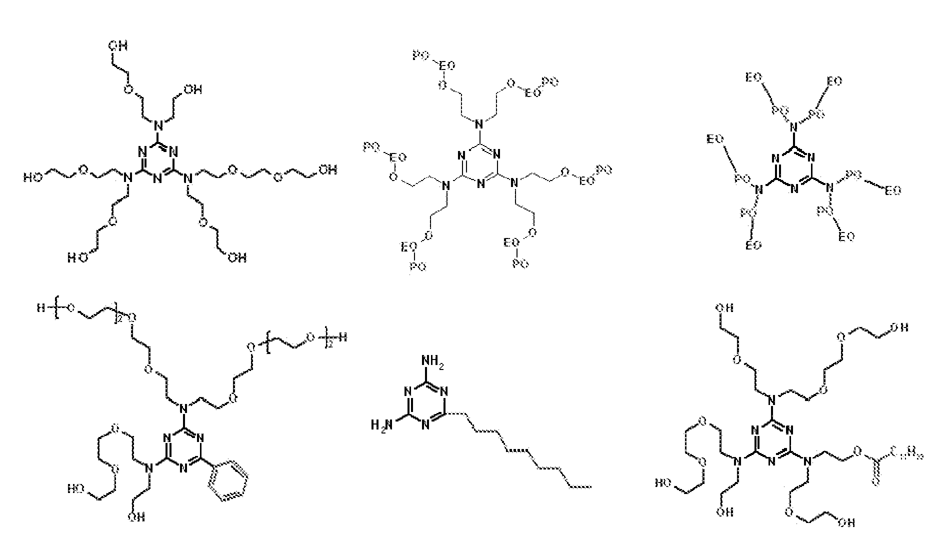 worin bedeuten
PO Polypropylenoxid-Rest,
EO Polyethylenoxid-Rest,
wobei die einzelnen Ethylenoxid- und Polyethylenoxid-Einheiten blockweise, alternierend oder statistisch verteilt auftreten können.

Bevorzugte Polyamine sind die unter den Marken Polymin^{®} SK = Lupasol^{®} SK = Lupamin^{®} SK Polymin^{®} HM Lupamin^{®} 9030 PVAm^{®} bekannten Produkte.

Besonders bevorzugte Mengenverhältnis vorgeschäumter Polystyrolpartikel zu Polyamin A betragen von 100:0,5 bis 100 : 10. insbesondere 100:1 bis 100 : 5. In einer weiteren Ausführungsform sind die Schaumstoffpartikel zusätzlich mit einem Polyacrylsäureester-Copolymer, insbesondere mit wiederkehrenden polymerisierten Acrylnitrileinheiten beschichtet.

### Ausgangsstoff aus expandierbarem Polystyrol

Bei dem erfindungsgemäßen Verfahren setzt man Partikel aus expandierbaren Polystyrol ein.

Man erhält sie vorzugsweise
A)
   durch Suspensionspolymerisation von Styrol und ggf. Comonomeren in Gegenwart eines Treibmittels, oder
B)
   durch Imprägnierung von Polystyrol mit einem Treibmittel in erhitzter Suspension, oder
C)
   durch Einmischen eines Treibmittels in eine Polystyrolschmelze in einer Mischvorrichtung (z.B. Extruder) mit anschließender Granulierung (z.B. Unterwasserdruckgranulierung), woran sich jeweils das Vorschäumen anschließt.

Expandierbare Styrolpolymerisat-Partikel sind solche, die durch z. B. mit Heißluft oder Wasserdampf zu expandierten, Styrolpolymerisat-Partikeln verschäumbar sind. Sie enthalten in der Regel chemische oder physikalische Treibmittel in Mengen von 2 bis 10 Gew.-%, bevorzugt 3 bis 7 Gew.-%, bezogen auf das Styrolpolymerisat.

Bevorzugte physikalische Treibmittel sind Gase, wie Stickstoff oder Kohlendioxid oder aliphatische Kohlenwasserstoffe mit 2 bis 7 Kohlenstoffatomen, Alkohole, Ketone, Ether oder halogenierte Kohlenwasserstoffe. Besonders bevorzugt werden iso-Butan, n-Butan, iso-Pentan, neo-Pentan, Hexan oder Gemische davon eingesetzt.

Des Weiteren können die expandierbaren Styrolpolymerisat-Partikel übliche Hilfsstoffe, wie Farbstoffe, Pigmente, Füllstoffe, IR-Absorber, wie Ruß, Aluminium oder Graphit, Stabilisatoren, Keimbildner oder Gleitmittel in wirksamen Mengen enthalten.

Die expandierbaren Styrolpolymerisat-Partikel können je nach Herstellverfahren kugel- bzw. perlförmig oder zylinderförmig sein und weisen in der Regel einen mittleren Teilchendurchmesser im Bereich von 0,05 bis 5 mm, insbesondere 0,3 bis 2,5 mm auf, die gegebenenfalls durch Siebung in einzelne Fraktionen aufgeteilt werden können.

Die expandierbaren Styrolpolymerisat-Partikel haben entsprechend dem Expansionsgrad mittlere Teilchendurchmesser im Bereich von 1 bis 10 mm, insbesondere 2 bis 6 mm und eine Dichte im Bereich von 10 bis 200 kg/m³.

Die expandierbaren Styrolpolymerisat-Partikel können beispielsweise durch Druckimprägnierung von thermoplastischen Polymer-Partikeln mit Treibmitteln in einem Kessel, durch Suspensionspolymerisation in Gegenwart von Treibmitteln oder durch Schmelzeimprägnierung in einem Extruder oder statischen Mischer und anschließende Druckunterwassergranulierung erhalten werden. Sie werden vorzugsweise wie folgt weiter verarbeitet.

### Vorschäumen der Partikel (Schritt a))

Expandierte Styrolpolymerisatpartikel können durch Verschäumen von expandierbaren Styrolpolymerisat-Partikeln, z. B. mit Heißluft oder Wasserdampf in Druckvorschäumern, durch Druckimprägnierung von Styrolpolymerisat-Partikeln mit Treibmitteln in einem Kessel und anschließendem Entspannen oder durch Schmelzeextrusion einer treibmittelhaltigen Schmelze unter Aufschäumen und anschließender Granulierung erhalten werden. In der Regel lassen sich die mit der erfindungsgemäßen Beschichtungszusammensetzung beschichteten expandierbaren Styrolpolymerisate im Vergleich zu herkömmlichen Beschichtungen unter vergleichbaren Vorschäumbedingungen zu niedrigeren Schüttdichten verschäumen. Die Schüttdichten bei einmaligem Vorschäumen liegen in der Regel im Bereich von 10 bis 20 kg/m³, vorzugsweise im Bereich von 15 bis 18 kg/m³.

Beim Vorschäumen werden die EPS-Partikel in an sich bekannter Weise expandiert. Die Erwärmung erfolgt üblicherweise durch Wasserdampf oder Heißluft.

Um zu verhindern, dass die Partikel bereits beim Vorschäumen vorzeitig miteinander verschweißen, liegen beim Vorschäumen die Partikel bevorzugt als lockere Schüttung vor. Lockere Schüttung bedeutet, dass die Kontaktflächen der Partikel miteinander klein sind, und die Schüttdichte, d.h. der Quotient aus Partikelmasse und eingenommenem Volumen einschließlich der Zwischenräume zwischen den Partikeln, gering ist. Eine geringe Schüttdichte bedeutet große Zwischenräume zwischen den Partikeln.

Die Verfahrensbedingungen beim Vorschäumen, z.B. Temperatur, Druck und Dauer des Vorschäumens, Dichte und Bewegungsgeschwindigkeit der Schüttung, sind in der beschriebenen Weise derart zu wählen, dass die Partikel noch nicht oder nur in untergeordnetem Ausmaß miteinander verschweißen. Ein geringer Anteil solcher vorzeitig verschweißter Partikel (Agglomerate), beispielsweise bis 10 Gew.-% bezogen auf die vorgeschäumten Partikel, ist üblicherweise unproblematisch. Ist der Agglomeratanteil größer, so kann er durch Klassieren, z.B. durch Sieben der Partikel mit entsprechender Maschenweite oder durch Windsichten, abgetrennt werden.

Nach dem Vorschäumen liegen die Partikel partiell expandiert vor. Erfindungsgemäß beträgt die Schüttdichte der vorgeschäumten Partikel 5 bis 50, bevorzugt 5 bis 40 und insbesondere 8 bis 30 g/l, ermittelt nach DIN EN ISO 60.

Falls gewünscht werden die vorgeschäumten Partikel vor der Beschichtung mit dem wasserabsorbierenden Polymer W (Schritt b)) an der Luft bei 0 bis 80, bevorzugt 10 bis 40°C für eine Dauer von 1 bis 48, bevorzugt 4 bis 24 Stunden zwischengelagert, wobei die Umgebungsluft in die Partikel eindiffundiert und einen Teil des eingeschlossenen Treibmittels verdrängt. Die eingetretene Luft erleichtert das Ausschäumen beim Ausschäumverfahren und erhöht die Stabilität des Schaums.

### Beschichten der Partikel (Schritt b))

Das Beschichten der vorgeschäumten Partikel in Schritt b) erfolgt an sich in üblicher Weise, beispielsweise durch Mischen, Besprühen, Tauchen oder anderweitiges Benetzen der Partikel mit dem Flammschutzmittel F, dem Polyamin A und dem wasserabsorbierenden Polymer W, oder durch Auftrommeln von F A und W auf die Partikel. Dazu werden übliche Mischer, Sprühvorrichtungen, Tauchvorrichtungen bzw. Trommelapparaturen verwendet. Bevorzugt wird das wasserabsorbierende Polymer W trocken oder feucht (z.B. als Gel), jedoch nicht als leichtflüssige Lösung aufgebracht.

Das Mengenverhältnis beim Beschichtungsvorgang hängt u.a. von der Menge an wasserabsorbierenden Polymer W ab, welche die fertigen beschichteten Partikel enthalten sollen. Üblicherweise liegt das Mengenverhältnis von vorgeschäumten Polystyrolpartikeln (aus Schritt Wa)) zu wasserabsorbierendem Polymer W bei 0,5 : 1 bis 100 : 1, bevorzugt 1 : 1 bis 50 : 1, insbesondere 2 : 1 bis 50 : 1. Dabei wird das wasserabsorbierende Polymer W gerechnet als getrocknetes Polymer, also beispielsweise gerechnet als getrocknetes Hydrogel (Superabsorber-Pulver).

Das Polyamin A wird vorzugsweise vor dem Polymer W und dem Flammschutzmittel F aufgebracht, es ist aber auch möglich, die Polymeren F, A und W gleichzeitig aufzubringen.

Polyamin A wird vorzugsweise in einer Menge von 1 bis 5 Gew.-%, bezogen auf das eingesetzte Polystyrol, verwendet.

Gegenstand der Erfindung sind auch die mit einem wasserabsorbierenden Polymer W und dem Flammschutzmittel F beschichteten Partikel aus vorgeschäumtem Polystyrol, erhältlich nach dem vorstehend beschriebenen Verfahren.

### Formkörperherstellung (Schritt c))

Diese Partikel können zur Herstellung von Formkörpern aus Polystyrolschaum verwendet werden. Zur Herstellung von Schaumstoffen werden die erfindungsgemäßen vorgeschäumten und beschichteten Partikel vorzugsweise in an sich bekannter Weise durch Erhitzen auf Temperaturen oberhalb ihres Erweichungspunktes, beispielsweise mit Heißluft oder insbesondere mit Wasserdampf expandiert.

Die Verwendung zur Herstellung von Formkörpern aus Polystyrolschaum und die erhaltenen Formkörper sind ebenfalls Gegenstand der Erfindung. Bevorzugt handelt es sich bei den Formkörpern um Halbzeuge (Platten, Blöcke, Rohre, Stäbe, Profile, etc.) oder sonstige Formkörper mit einfacher oder komplexer Gestalt. Bevorzugt handelt es sich bei den Formkörpern um Platten, insbesondere Schaumstoffplatten.

Es ist auch möglich, als Formkörper zunächst Blöcke herzustellen und die Blöcke anschließend in Platten zu zerteilen, beispielsweise durch Schneiden oder Sägen.

Die Dicke der Schaumstoffplatten kann in weiten Grenzen variieren und beträgt üblicherweise 1 bis 500, bevorzugt 10 bis 300 mm. Die Länge und Breite der Platten ist ebenfalls in weiten Grenzen variabel. Sie wird u.a. durch die Größe des Werkzeugs (Press- oder Schäumform) und beim Verpressen (siehe unten) durch die Schließkraft der verwendeten Presse begrenzt.

Außerdem wurde ein Verfahren zur Herstellung der Formkörper durch Verpressen (Verpressverfahren) gefunden, und ein Verfahren zur Herstellung der Formkörper durch Ausschäumen (Ausschäumverfahren) gefunden.

### Verpressverfahren

Beim Verpressverfahren werden in Schritt I) die erfindungsgemäßen expandierbaren, vorgeschäumten und beschichteten Partikel in eine gasdurchlässige Form gefüllt. Die Gasdurchlässigkeit kann beispielsweise durch Bohrungen erzielt werden, mit denen die Form versehen ist und die bevorzugt derart beschaffen sind, dass sie beim anschließenden Verpressen (Schritt 11), siehe unten) nicht vom Polymer verstopft werden, beispielsweise indem sie einen geringen Durchmesser aufweisen.

Die Geometrie (Raumform) der gasdurchlässigen Form entspricht in der Regel der gewünschten Geometrie des späteren Formkörpers. Sollen Schaumstoffplatten hergestellt werden, kann man eine einfache kastenförmige Form verwenden. Insbesondere bei komplizierteren Geometrien kann es erforderlich sein, die Schüttung der in die Form eingefüllten Partikel zu verdichten und auf diese Weise unerwünschte Hohlräume zu beseitigen. Das Verdichten kann z.B. durch Rütteln der Form, Taumelbewegungen oder andere geeignete Maßnahmen erfolgen.

Da die Partikel anschließend verpresst werden, ist es - anders als beim weiter unten beschriebenen Ausschäumverfahren - nicht bevorzugt, aber auch nicht nachteilig, die Form randvoll mit den Partikeln zu füllen. Der Füllgrad richtet sich u. a. nach der gewünschten Dicke des späteren Formkörpers.

In Schritt II) werden die eingefüllten Partikel unter Volumenreduktion zu einem Pressling verpresst. Die Volumenreduktion beträgt in der Regel 1 bis 80, bevorzugt 5 bis 60 und insbesondere 10 bis 50 Vol.-%, bezogen auf das Volumen der eingefüllten Partikel vor dem Verpressen.

Die Temperatur beim Verpressen beträgt üblicherweise 20 bis 100, bevorzugt 30 bis 90 und insbesondere 40 bis 80°C. Das Temperieren kann z.B. durch elektrische Beheizung oder Wärmeüberträgermedien erfolgen. Das Druckmaximum beim Pressvorgang bzw. die Schließkraft der Presse sowie die Dauer des Verpressens (Presszeit) hängen u. a. von Größe und Geometrie sowie der gewünschten Dichte des Formkörpers ab und können in weiten Grenzen variieren.

Die Gasdurchlässigkeit der Form gewährleistet, dass in und zwischen den Partikeln vorhandenes Treibmittel, Luft oder andere Gase beim Verpressen gleichmäßig entweichen können. Sofern die beschichteten Partikel nicht getrocknet, sondern mit "feuchter" Beschichtung eingesetzt wurden, entweichen auch die flüchtigen Hilfsstoffe, z.B. Wasser.

Zum Verpressen eignen sich übliche Pressen mit Pressform und Stempel, beispielsweise Etagenpressen. Dabei können die Form oder der Stempel oder beide Bauteile temperiert sein.

In Schritt III) wird der in Schritt II) erhaltene Pressling ausgehärtet, indem man ihn bzw. die Form auf 20 bis 100, bevorzugt 30 bis 90 und insbesondere 40 bis 80°C temperiert. Das Temperieren kann z.B. durch elektrische Beheizung oder Wärmeüberträgermedien erfolgen. Der Druck beim Aushärten und die Aushärtungsdauer hängen u.a. von Größe und Geometrie des Formkörpers ab und variieren in weiten Grenzen.

Die genannten Temperaturen und Drucke müssen nicht während der gesamten Aushärtungsdauer aufrecht erhalten werden; vielmehr kann man den Pressling auch bei z.B. Raumtemperatur und Umgebungsdruck eine gewisse Zeit ruhen lassen, während der er vollständig aushärtet. Die Form kann beim Aushärten geschlossen oder geöffnet sein.

Temperatur, Druck, Presszeit und sonstige Bedingungen beim Verpressen können innerhalb der bei Schritt II) genannten Bereiche derart gewählt werden, dass der Pressling bereits beim Verpressen aushärtet, d.h. der Verpressungsschritt II) und der Aushärtungsschritt III) fallen zusammen. Alternativ kann Schritt III) im Anschluss an Schritt II) ausgeführt werden, wofür dann die für Schritt III) genannten Bedingungen gelten.

In Schritt IV) des Verpressverfahrens entnimmt man den erhaltenen Formkörper aus der Form. Dies kann manuell oder automatisiert mittels üblicher Auswurf- bzw. Entformungsvorrichtungen erfolgen.

Demnach ist das erfindungsgemäße Verfahren zur Herstellung der Formkörper durch Verpressen **dadurch gekennzeichnet, dass** man
I) die erfindungsgemäßen Partikel in eine gasdurchlässige Form einfüllt,
II) die eingefüllten Partikel in der geschlossenen Form unter Volumenreduktion zu einem Pressling verpresst,
III) den Pressling durch Temperieren auf 20 bis 100°C aushärtet, und
IV) den erhaltenen Formkörper aus der Form entnimmt.

Die Dichte der mit diesem Verpressverfahren erhaltenen Formkörper beträgt in der Regel 15 bis 150, bevorzugt 20 bis 120 und besonders bevorzugt 20 bis 100 g/l gemäß DIN 53420. Die Formkörper weisen bevorzugt keinen ausgeprägten Dichtegradienten auf, d.h. die Randschichten haben keine deutlich höhere Dichte als die inneren Bereiche des Formkörpers.

### Ausschäumverfahren

Beim Ausschäumverfahren werden in Schritt i) die erfindungsgemäßen vorgeschäumten und mit W beschichteten Partikel in eine Form gefüllt.

Die Geometrie (Raumform) der Form entspricht üblicherweise der gewünschten Geometrie des späteren Formkörpers. Für Schaumstoffplatten ist beispielsweise eine einfache kastenförmige Form geeignet. Bei komplizierteren Geometrien kann es erforderlich sein, die Schüttung der in die Form eingefüllten Partikel zu verdichten wie beim Verpressverfahren beschrieben.

Da die Partikel beim anschließenden Ausschäumen miteinander verschweißen sollen, ist es vorteilhaft, die Form randvoll mit den Partikeln zu füllen, um das Leervolumen in der Form gering zu halten.

In Schritt ii) werden die eingefüllten Partikel in der geschlossenen Form durch Temperieren (beispielsweise mit Wasserdampf, Heißluft oder einem anderen Wärmeüberträger) auf 60 bis 120, bevorzugt 70 bis 110°C ausgeschäumt. Dabei verschweißen die Partikel zu dem Formkörper, indem die Zwischenräume in der Partikelschüttung durch die expandierenden Partikel ausgefüllt werden und die erweichten Partikel miteinander "verschmelzen".

Der Druck beim Ausschäumen ist üblicherweise nicht kritisch und beträgt in der Regel 0,05 bis 2 bar. Die Dauer des Ausschäumens hängt u. a. von Größe und Geometrie sowie der gewünschten Dichte des Formkörpers ab und kann in weiten Grenzen variieren.

In Schritt iii) des Ausschäumverfahrens entnimmt man das erhaltene Formkörper aus der Form, was manuell oder automatisiert mittels üblicher Auswurf- bzw. Entformungsvorrichtungen erfolgen kann.

Folglich ist das erfindungsgemäße Verfahren zur Herstellung der Formkörper durch Ausschäumen **dadurch gekennzeichnet, dass** man
i) die erfindungsgemäßen Partikel in eine Form einfüllt,
ii) die eingefüllten Partikel in der geschlossenen Form durch Temperieren auf 60 bis 120°C ausschäumt, wobei die Partikel zu dem Formkörper verschweißen, und
iii) den erhaltenen Formkörper aus der Form entnimmt.

Die mit diesem Ausschäumverfahren erhaltenen Formkörper weisen üblicherweise eine Dichte von 10 bis 100, bevorzugt 15 bis 80 und besonders bevorzugt 15 bis 60 g/l auf, bestimmt gemäß DIN 53420. Die Formkörper weisen bevorzugt keinen ausgeprägten Dichtegradienten auf, d.h. die Randschichten haben keine deutlich höhere Dichte als die inneren Bereiche des Formkörpers.

Typische Abmessungen der mit dem Verpress- oder Ausschäumverfahren erhältlichen Schaumstoffplatten wurden bereits genannt.

Die erfindungsgemäßen Formkörper, beispielsweise Schaumstoffplatten, können mit Formgebungen oder Elementen versehen sein, die eine Montage erleichtern und mit denen sich eine ebene, weitgehend fugenfreie Oberfläche erzielen lässt. Beispielsweise kann man die Seitenflächen bzw. Ränder der Platten als Nut-Feder-Verbindungen, Klemm-, Schnapp- oder Einrastverbindungen ausbilden. Sie lassen sich z.B. durch Bohrungen, Falze, Stege, Nuten, Ausschnitte oder mittels angeformter Zungen, Zapfen, Laschen o. ä. verwirklichen.

Außerdem kann man die Formkörper mit einer oder mehreren Deckschichten aus Papier, Pappe, Karton, Gipskarton, Kunststoffen oder Metallen versehen. Die Deckschicht kann z.B. die mechanische Stabilität der Platte bzw. des sonstigen Formkörpers erhöhen (im Sinne einer Tragschicht), die akustischen Eigenschaften oder das Brandverhalten verändern, und/oder als Dekorschicht dienen. Es können geschlossene Deckschichten oder solche mit Aussparungen aufgebracht werden; letztere sind beispielsweise Lochplatten Gitter oder Netze. Das Aufbringen (Kaschieren) erfolgt beispielsweise durch Kleben, Pressen oder andere übliche Kaschierverfahren.

### Verwendung der Formkörper

Die erfindungsgemäßen Formkörper können zu vielfältigsten Zwecken verwendet werden, beispielsweise im Bauwesen. Diese Verwendung ist ebenfalls Gegenstand der Erfindung. Besonders bevorzugt werden die Formkörper zur Innendämmung von Gebäuden verwendet.

Bei der vorliegenden Erfindung schließt der Begriff "Gebäude" auch andere geschlossene Räume ein, beispielsweise Transport- und Aufbewahrungsbehälter, Frachtcontainer, Güterwaggons, Laderäume von Flugzeugen, Raumfahrzeugen, Schiffen und Fahrzeugen (Pkw, Lkw, Schienenfahrzeuge, etc.). Die Formkörper eignen sich demnach auch zur Dämmung derartiger Behälter, Frachtcontainer, Waggons bzw. Laderäume.

Die beschichteten Partikel und die daraus erhältlichen Formkörper zeichnen sich dadurch aus, dass sie Luftfeuchtigkeit reversibel aufnehmen können. Werden die erfindungsgemäßen Formkörper in Innenräumen verwendet, so kann Schimmelwachstum an der Wand vermieden werden.

### Beispiele

Es wurden folgende Einsatzstoffe verwendet:

### Polystyrolpartikel:

Handelsübliche, treibmittelhaltige, nicht expandierte Polystyrolpartikel
Wasserabsorbierendes Polymer W1

Ein wasserabsorbierendes Polymer auf Basis einer vernetzten Acrylsäure, enthaltend Polyethylenglykoldiacrylat als Vernetzer. Das Polymer war partikelförmig und mit Aluminiumsulfat oberflächennachvernetzt. Ca. 50 - 75 mol-% der Acrylsäuregruppen waren neutralisiert. Die Partikelgröße (Siebschnitt) betrug 50 bis 500 µm, bestimmt gemäß der von der EDANA empfohlenen Testmethode Nr. 420.2-02 "Particle size distribution". Die Zentrifugenretentionskapazität (CRC) des Superabsorbers betrug 30 g/g, ermittelt in 0,9 gew.-%iger wässriger Natriumchlorid-Lösung gemäß der von der EDANA empfohlenen Testmethode Nr. 441.2-02 "Centrifuge retention capacity".

### Polyamin A

Es wurde folgende Polyamine A verwendet:

| **Nr.** | **Marke** | **Struktur** |
|---|---|---|
| A1 | Polymin HM | kationisches, hochmolekulares Polyethylenimin, pH-Wert DIN 19268: ca. 8,3, scheinbare Viskosität ISO 2555, Typ RVT, 20°C: ca. 225mPa.s s |
| A2 | Polymin SK | kationisches, hochmolekulares Polyethylenimin, ph-Wert DIN 19268: ca. 8,3, scheinbare Viskosität ISO 2555, Typ RVT, 20°C: ca. 750mPa.s s |
| A3 | | Melaminpolyol |

Weiterhin wurden folgende Acrylsäureester-Copolymere verwendet:
- AD1:: Feststoffgehalt 55,0-57,0%; pH-Wert 4,5-6,5; Viskosität 50-150 mPa.s; selbstvernetzend
- AD2:: ammoniakfreies Copolymerisat aus Acrylsäureester und Acrylnitril; 55%ige wäßrige Dispersion; Feststoffgehalt 53,0 - 55,0 %; pH-Wert 6,5-8,5

### Flammschutzmittel F

Es wurden folgende Flammschutzmittel verwendet:

| **Nr.** | **Marke** | **Struktur** |
|---|---|---|
| F1 | Apyral 1 E, Hersteller Nabaltec AG | Aluminiumhydroxid D₅₀: 45 µm |
| F2 | Apyral 2E, Hersteller Nabaltec AG | Aluminiumhydroxid D₅₀: 20 µm |

### Beispiel 1:

A. Die Polystyrolpartikel wurden in einer handelsüblichen Vorschäumapparatur vorgeschäumt. Die Schüttdichte der vorgeschäumten Partikel wurde dabei auf 20 g/l eingestellt, gemessen nach DIN EN ISO 60.
B. In einem Mischer wurden 1200 g dieser vorgeschäumten Partikel der Schüttdichte 20 g/l mit 281,3 g A1 (3 % bezogen auf den Feststoffanteil von A1 gegen Polystyrol) 5 Minuten lang bei 25 °C vermischt. Dabei zog A1 vollständig auf die Partikel auf. Danach fügte man ohne weitere Trocknung 180 g des Polymeren W1 (15% bezogen auf Polystyrol) innerhalb von 3 Minuten zu und mischte für weitere 2 Minuten.
C. Anschließend gab man 480 g des Flammschutzmittels F1 zu (40% bezogen auf Polystyrol) innerhalb von 3 Minuten zu und mischte für weitere 2 Minuten nach.
D. Das beschichtete Produkt wurde aus dem Mischer entnommen und gewogen. Es wurden 2063 g erhalten, die anschließend ausgesiebt wurden. Nach der Siebung wurden 1978 g zurückerhalten.
E. Die so erhaltenen Partikel wurden in einem Formkörperautomaten der Firma Erlenbach zu Schaumstoffformkörpern der Dimensionen 80 x 60 x 5 cm verarbeitet.

### Beispiel 2:

Gemäß Beispiel 1 wurden vorgeschäumte Partikel mit 3% A2 vermischt und anschließend mit 40% F1 ohne vorherige Behandlung mit W1 beschichtet. Die Auswage nach dem Sieben betrug 1766 g von eingewogenen 1767 g.

### Beispiel 3:

Gemäß Beispiel 1 wurden die vorgeschäumten Partikel mit 4% A2 behandelt und anschließend mit 25% W1 und 40% F2 beschichtet.

### Beispiel 4:

Gemäß Beispiel 1 wurden die vorgeschäumten Partikel mit 2% A2 behandelt und anschließend mit 20% W1 und 30% F2 beschichtet.

### Beispiel 5:

Gemäß Beispiel 1 wurden die vorgeschäumten Partikel mit 3% Acronal N 137 behandelt und anschließend mit 15% W1 und 40% F2 beschichtet.

### Beispiel 6:

Gemäß Beispiel 1 wurden die vorgeschäumten Partikel mit 3% A3 behandelt und anschließend mit 15% W1 und 40% F2 beschichtet.

### Untersuchung der Feuchtigkeitsaufnahme der Formkörper:

Der Formkörper wurde in einem Klimaschrank gelagert und sein Gewicht im Abstand von 20 sec ermittelt. Es wurde folgendes Klimaprofil vorgegeben:

Zunächst (Startzeit t = 0) wurde der Formkörper zwecks Gleichgewichtseinstellung 60 min bei einem Normalklima von 23°C und 50 % relativer Feuchte (RF; die relative Feuchte ist der Quotient aus Wasserdampfpartialdruck und Wasserdampfdruck multipliziert mit 100%) gelagert. Aus den letzten 10 Messwerten dieser Normalklima-Lagerung wurde das arithmetische Mittel gebildet; es stellte den Bezugspunkt (Nullpunkt) für die folgenden Messungen dar.

Dem Normalklima folgte unmittelbar (ab t = 60 min) ein Feuchtklima mit 30°C und 95 % RF für die Dauer von 48 Stunden. Aus den letzten 10 Messpunkten bei Feuchtklima wurde die flächenbezogene Feuchtigkeitsaufnahme [g/m²] ermittelt, siehe Tabelle.

Dem Feuchtklima folgte unmittelbar ein Trockenklima von 40°C und 40 % RF für die Dauer von 6 Stunden. Das Probengewicht wurde alle 20 sec. erfasst. Der Nullpunkt wurde aus dem Mittelwert der letzten 10 Messpunkte der Gleichgewichtsfindung definiert. Tab. 1 nennt die volumenbezogene Feuchtigkeitsabnahme [g/l²], definiert als Messwert zu Beginn des Trockenklimas minus Messwert zum Ende des Trockenklimas.

Tab. 1 fasst die Ergebnisse zusammen.

Die Untersuchung zum Flammschutz nach der Richtlinie B2 wurden durchgeführt wie beschrieben in der DIN 4102 Teil 1 von 1998, Abschnitt 6.2: Baustoffklasse B2 von der Brandprüfstelle der BASF.

Wie sich aus Tab. 1 ersehen lässt, wird selbst beim Einsatz geringer Mengen an Flammschutzmittel der Brandtest bestanden.

**Tab. 1**

| **Beispiel** | **1 (Wi-104)** | **3 (Wi-137)** | **4 (Wi-71)** | **5 (Wi-129)** | **6 (Wi-131)** |
|---|---|---|---|---|---|
| Wasserabsorbierendes Polymer W1 | 15% | 20% | 20% | 15% | 15% |
| Flammschutzmittel | 40% F1 | 40% F1 | 30% F2 | 40% F2 | 40% F2 |
| Polyamin A/Acrylsäureester | 3% A1 | 2% A2 | 2% A2 | AD2 | 3% Melamin Polyol |
| Feuchteaufnahme [%] nach 48h bei 95% RF | 1,86 g/l | 1,78 g/l | 1,01 g/l | 1,6 g/l | 1,5 g/l |
| Brandtest B2 Testkörper: 190mm x 90mm x 10mm | bestanden | bestanden | bestanden | bestanden | bestanden |

Die %-Angaben bedeuten Gewichtsangaben bezogen auf Polystyrol.

Bei Verwendung von AD1 Polymer wird ebenfalls eine Verbesserung des Brandschutzes erhalten.

## Patentansprüche

1. Schaumstoffpartikel aus einem Styrolpolymeren, **dadurch gekennzeichnet, dass** die Schaumstoffpartikel mit einer Kombination aus einem wasserabsorbierenden Polymer W und mit einem Flammschutzmittel F ausgerüstet sind.

2. Schaumstoffpartikel gemäß Anspruch 1, **dadurch gekennzeichnet, dass** das Flammschutzmittel ein anorganisches Flammschutzmittel ist.

3. Schaumstoffpartikel gemäß wenigstens einem der vorhergehenden Ansprüche, **dadurch gekennzeichnet, dass** das Flammschutzmittel ein Aluminiumoxid oder ein Ammoniumphosphat ist.

4. Schaumstoffpartikel gemäß wenigstens einem der vorhergehenden Ansprüche, **dadurch gekennzeichnet, dass** die verwendeten Flammschutzmittel halogenfrei sind.

5. Schaumstoffpartikel gemäß wenigstens einem der vorhergehenden Ansprüche, **dadurch gekennzeichnet, dass** die Flammschutzmittel in einer Konzentration von 10 bis 70 Gew.-%, bevorzugt 20 bis 40 Gew.-% bezogen auf die Schaumstoffpartikel enthalten sind.

6. Schaumstoffpartikel gemäß wenigstens einem der vorhergehenden Ansprüche, **dadurch gekennzeichnet, dass** das wasserabsorbierende Polymer W ein Wasseraufnahmevermögen von wenigstens 10 g Wasser/g Polymer aufweist.

7. Schaumstoffpartikel gemäß wenigstens einem der vorhergehenden Ansprüche, **dadurch gekennzeichnet, dass** das Polymer W ein säuregruppentragendes Polymer ist, dessen Säuregruppen zu 10 bis 90 % neutralisiert sind.

8. Schaumstoffpartikel gemäß wenigstens einem der vorhergehenden Ansprüche, **dadurch gekennzeichnet, dass** das wasserabsorbierende Polymer W auf einer ethylenisch ungesättigten Carbonsäure, insbesondere Acrylsäure, Methacrylsäure, Maleinsäure, Fumarsäure oder Itaconsäure, beruht.

9. Schaumstoffpartikel gemäß wenigstens einem der vorhergehenden Ansprüche, **dadurch gekennzeichnet, dass** das wasserabsorbierende Polymer W eine polymerisierte vernetzte Acrylsäure ist.

10. Schaumstoffpartikel gemäß wenigstens einem der vorhergehenden Ansprüche, **dadurch gekennzeichnet, dass** die Partikel zusätzlich mit einem Polyamin A oder einem Polyacrylsäureester-Copolymer beschichtet sind.

11. Schaumstoffpartikel gemäß Anspruch 10, **dadurch gekennzeichnet, dass** das Polyamin A ein Polyethylenimin ist
oder
dass das Polyamin A ein Copolymer aus Polyaminen mit anderen, Stickstoff enthaltenden Monomeren ist
oder
dass das Polymer A ein Kondensationsprodukt ist, welches erhältlich ist durch Umsetzung von Polyamino-Verbindungen mit Polyalkylenoxid-Derivaten, die an den endständigen Hydroxylgruppen mit Epichlorhydrin umgesetzt sind
oder
dass das Polyamin A ein Triazinderivat mit wenigstens einer gegebenenfalls substituierten Aminogruppe ist, wobei entweder der Triazinring direkt oder die Aminogruppe substituiert ist mit einem Alkylen oder Alkylenoxid-Rest mit wenigstens 8 Kohlenstoffatomen, wobei der Alkylenrest endständig substituiert sein kann.

12. Schaumstoffpartikel gemäß wenigstens einem der vorhergehenden Ansprüche, **dadurch gekennzeichnet, dass** das Polyamin A ein hochmolekulares Polyethylenimin ist.

13. Verfahren zur Herstellung von Schaumstoffpartikeln gemäß wenigstens einem der vorhergehenden Ansprüche, **dadurch gekennzeichnet, dass** man
a) zunächst Partikel aus expandierbarem Polystyrol vorschäumt und diese dann
b) mit einem Flammschutzmittel F und
c) mit einem wasserabsorbierenden Polymer W beschichtet, wobei die Beschichtung mit dem Polymer W und dem Flammschutzmittel F in beliebiger Reihenfolge oder gleichzeitig erfolgen kann.

14. Formkörper erhältlich aus Schaumstoffpartikeln gemäß wenigstens einem der vorhergehenden Ansprüche nach dem Verpress- oder dem Ausschäumverfahren.

15. Verwendung eines Formkörpers gemäß Anspruch 14 zur Dämmung von Gebäuden, Behältern, Frachtcontainern oder Waggons.
